# EUROPEAN PATENT APPLICATION

(11) **EP 1 703 433 A1**
(43) Date of publication of application: **20.09.2006**
(21) Application number: 06005165.3
(22) Date of filing: 14.03.2006
(51) Int. Cl.: G06K 7/00

(54) **Method and apparatus for contactless ICC connectivity**

(30) Priority: 15.03.2005 US 662173 P; 03.03.2006 US 367565
(71) Applicant: O2 Micro, Inc., Santa Clara, CA 95054 (US)
(72) Inventor: Morrow, Neil, San Jose, CA 95210 (US); Oh, Brian, Santa Clara, CA 95050 (US)
(74) Representative: Lippert, Stachow & Partner

(57) **Abstract**

The present invention provides a device (200) for connecting a contactless integrated chip card (ICC) to a host computer having a USB host input/output bus interface (207), comprising a first logic set, second logic set, and a third logic set. The first logic set detects the presence of an external radio frequency transceiver RF circuitry (203) which commmicates with the contactless ICC. The second logic set includes a Chip/smart Card Interface Device (CCID) interface, wherein the CCID interface is enabled when the first logic set positively detects the presence of the RF circuitry. The third logic set converts data received by the CCID interface to a format compatible with the USB host input/output signal interface so as to connect the contactless ICC to the host computer.

## Description

### CROSS REFERENCE TO RELATED APPLICATIONS

This application claims priority to the co-pending provisional patent application, Serial Number 60/662,173, Attorney Docket Number 02-0234, entitled "METHOD, APPARATUS, AND SYSTEM FOR CONTACTLESS ICC CONNECTIVITY,'' with filing date March 15, 2005, and assigned to the assignee of the present invention, which is herein incorporated by reference in its entirety.

### FIELD OF THE INVENTION

This invention relates to the design and manufacturing of integrated chip card (ICC) interface devices, specifically contactless ICC interface devices (i.e. controllers)., software pragramming methods used to identify and control contactless integrated chip cards, also known as "Smart Cards", and computer systems that provide contactless ICC connectivity.

### BACKGROUND ART

Contactless ICC devices that comply to International Organization for Standardization (ISO) 14443, ISO 15693, and other proprietary standards, such as Philips MIFARE and Sony FeliCa, offer several advantages over ICC devices with contacts, such as environmental durability and usage methods since no mechanical connector is needed. A raise in popularity of such contactless cards drives demand for advanced connectivity systems, devices, and methods.

An advancement made by the industry for traditional contact ICC devices is the release of the Chip/Smart Card Interface Device (CCID) specification, enabling a common software interface for devices that support the standard. That is, a variety of ICC devices can be supported with devices complying with the CCID specification, and its derivatives.

However, these conventional support devices are designed to interface with traditional contact ICC devices and do not traditionally support contactless ICC devices. As such, independent and fully designed support devices capable with interfacing with contactless ICC devices needed to be created, thereby invoking additional cost, and duplication for supporting both contact and contactless ICC devices.

### SUMMARY OF THE INVENTION

The present invention provides for a method and apparatus for connecting a contactless integrated chip card to a host computer having a Universal Serial Bus (USB) host input/output bus interface, comprising a first logic set, a second logic set, and a third logic set. The first logic set detects the presence of an external radio frequency transceiver RF circuitry which communicates with the contactless ICC. The second logic set includes a Chip/smart Card Interface Device interface that is enabled when the first logic set positively detects the presence of the RF circuitry. The third logic set converts data received by the CCID interface to a format compatible with the USB host input/output signal interface so as to connect the contactless ICC to the host computer.

### BRIEF DESCRIPTION OF THE DRAWINGS

The accompanying drawings, which are incorporated in and form a part of this specification, illustrate embodiments of the present invention and, together with the description, serve to explain the principles of the invention:

FIG. 1 illustrates a block diagram of an contactless ICC controller according to an embodiment of the present invention.

FIG. 2 illustrates the RF module apparatus and related components according to an embodiment of the present invention.

FTG. 3 illustrates the computer system equipped with contactless ICC connectivity according to an embodiment of the present invention.

FIG. 4 illustrates a software flow for identifying contactless Smart Cards according to an embodiment of the present invention.

### DETAILED DESCRIPTION

Reference will now be made in detail to the preferred embodiments of the present invention, examples of which are illustrated in the accompanying drawings. While the invention will be described in conjunction with the preferred embodiments, it will be understood that they are not intended to limit the invention to these embodiments. On the contrary, the invention is intended to cover alternatives modifications and equivalents, which may be included within the spirit and scope of the invention as defined by the appended claims. Furthermore, in the following detailed description of embodiments of the present invention, numerous specific details are set forth in order to provide a thorough understanding of the present invention. However, it will be recognized by one of ordinary skill in the art that the present invention may be practiced without these specific details. In other instances, well-known methods, procedures, components, and circuits have not been described in detail as not to unnecessarily obscure aspects of the embodiments of the present invention.

In general, embodiments of the present invention are capable of extending a CCID device to support contactless ICC communication. This is accomplished by including a controller-generated pseudo answer-to-reset (ATR) for contactless cards that is supported and implemented using the CCID standard. Moreover, the controller senses the presence of external supporting RF circuitry required to support contactless ICC connectivity, and is able to modify device behavior based on what is sensed. Additionalty, embodiments of the present invention provide a modular approach to enabling contactless ICC connectivity through a connector. Furthermore, embodiments of the present invention provide methods for identifying a contactless ICC using the pseudo ATR provided by the controller, and through polling techniques that match contactless ICC serial number to a lookup table with known card attributes. As a result, embodiments of the present invention can utilize common CCID software structures for supporting ICC interface devices with contacts, and contactless ICC interface devices. Embodiments of the present invention and their benefits are further described below.

Embodiments of the present invention are directed to the support, design, and manufacturing of ICC interface devices, which are also known as "Smart Cards." Although embodiments as described throughout the specification are directed to ICC interface devices, it is equally intended that the terms "ICC interface devices" and "Smart Cards" can be used interchangeably throughout the body of the specification.

Embodiments of the present invention are described within the context of supporting contactless ICC interface devices using the USB Chip/Smart Card Interface Devices Specification, or its derivatives. However, other embodiments of the present invention are well suited to supporting contactless ICC interface devices using any interface other than the CCID specification.

Some portions of the detailed descriptions, which follow, are presented in terms of procedures, steps, logic blocks, processing, and other symbolic representations of operations on data bits within a computer memory. These descriptions and representations are the means used by those skilled in the data processing arts to most effectively convey the substance of their work to others skilled in the art. A procedure, computer executed step, logic block, process, etc., is here, and generally, conceived to be a self-consistent sequence of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

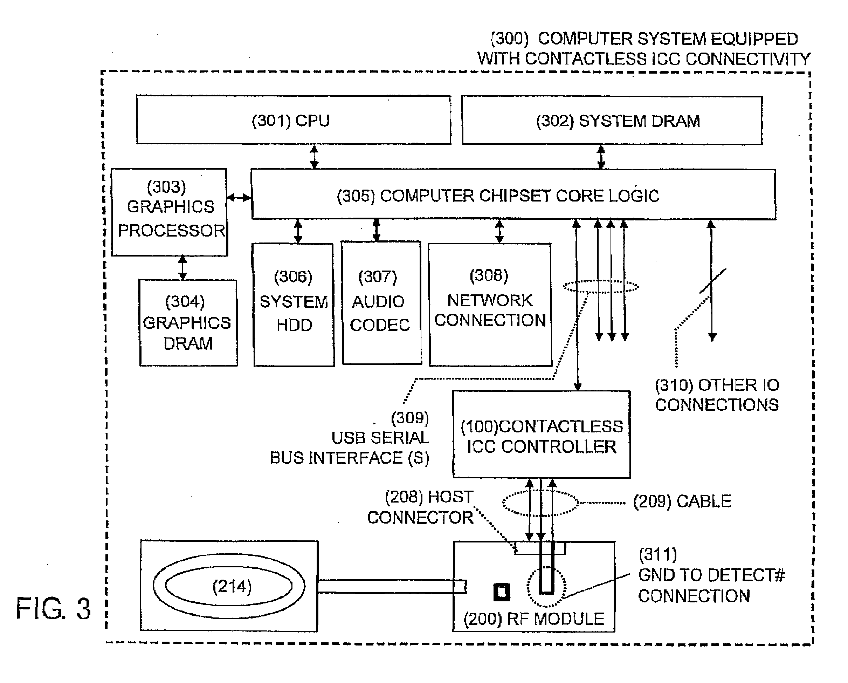

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "detecting," or "converting," or "comparing," or the like, refer to the action and processes of a computer system (e.g., computer system 300 of Figure 3), or similar electronic computing device, that manipulates and transforms data represented as physical (electronic) quantities within the computer system's registers and memories into other data similarly represented as physical quantities within the computer system memories or registers or other such information storage, transmission or display devices.

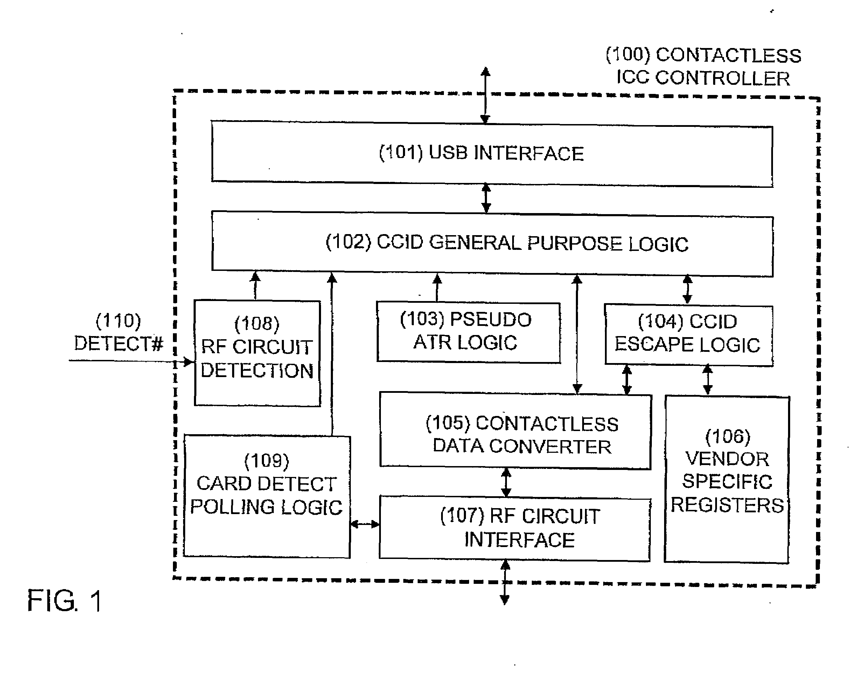

FIG. 1 illustrates a block diagram of the contactless ICC controller (100) that is capable of recognizing and supporting a contactless ICC interface device, according to an embodiment of the present invention. The controller (100) implements a USB interface (101) for connectivity to a computer system, such as computer system (300) of FIG.3. The USB interface is a two-wire signal structure operating a packet-based protocol to transfer control, status, and data information including USB device descriptor communication as specified in the USB specification, and its derivatives. Other embodiments are well suited to having the controller (100) implement any type of interface for connectivity to the computer system (300).

The contactless ICC controller (100) communicates functional capabilities through the interlace and class descriptors specified in the USB CCID specification, and includes logic (102) required for CCID specification compliance. The CCID general purpose logic (102) accepts commands and transmits responses specified in the CCID specification, where commands and responses are used for ICC control and data transfer, in one embodiment.

The contactless ICC controller (100) includes an RF circuit detection logic (108) to identify the presence of an external RF circuit (not shown), in accordance with one embodiment of the present invention. In the present embodiment, this is accomplished by an external input signal (110), for example DETECT#, where an active low input identifies the external RF circuit, in one embodiment. The external RF circuit provides for wireless communication between the ICC controller (100) and an ICC interface device (not shown).

When an external RF circuit is not present, in embodiments of the present invention, the controller (100) is able to identify this condition. In one embodiment, the controller (100) reports that the USB device is disconnected through USB protocols. In another embodiment, the controller (100) reports that it is not attached to the USB bus through alternate means. In still another embodiment, the controller (100) reports au ICC card removal through the CCID General Purpose Logic (102), or communicates this information to the host computer system (300) through alternate methods that involve standard, or vendor-specific, CCID accesses.

In one embodiment, the RF circuit detection logic (108) detects that the contactless ICC controller (100) is coupled to RF circuitry used for communicating with and controlling ICC interface devices. In another embodiment, alternate means are implemented for identifying that the contactless ICC controller (100) is coupled to RF circuitry for controlling contactless ICC interface devices.

In either case, when the present embodiment determines that the contactless ICC controller (100) is coupled to an RF circuit for controlling contactless ICC interface devices, the CCID general purpose logic (102) is then able to determine and report a fixed positive presence of an ICC interface device to the ICC application software through CCID methods, such as by the RDR_to_PC_SlotStatus message defined in the CCID, specification in one embodiment Alternately, the fixed positive presence is communicated by vendor-specific methods, such as through CCID Escape command communications processed by the CCID Escape logic (104), in another embodiment. In alternate embodiments using polling methods, card detection polling logic (109) or ICC application software repetitively checks for the presence of contactless Smart Cards by directly accessing the RF circuit interface (107).

In general, the CCID specification is designed for controlling ICC interface device contacts, and does not support contactless card operation. In another Embodiment, the CCID Escape logic (104) is equipped to map CCID Escape structured data to other vendor-specific registers (106). For example, the vendor-specifc registers (106) include registers that configure device (100) capabilities, such as the capability to supply power to an external circuit, or the capability to identify a type of external RF circuit.

In an embodiment of the present invention, the contactless data converter logic (105) generally controls the flow of information, consisting generally of standard CCID command structured data, between the CCID general purpose logic (102) and the RF circuit interface (107). This data flow permits the use of standard CCID data structures in the ICC application software running on the host computer system (300), as opposed to using contactless ICC controller vendor-specific, unique, Escape structured data as described above.

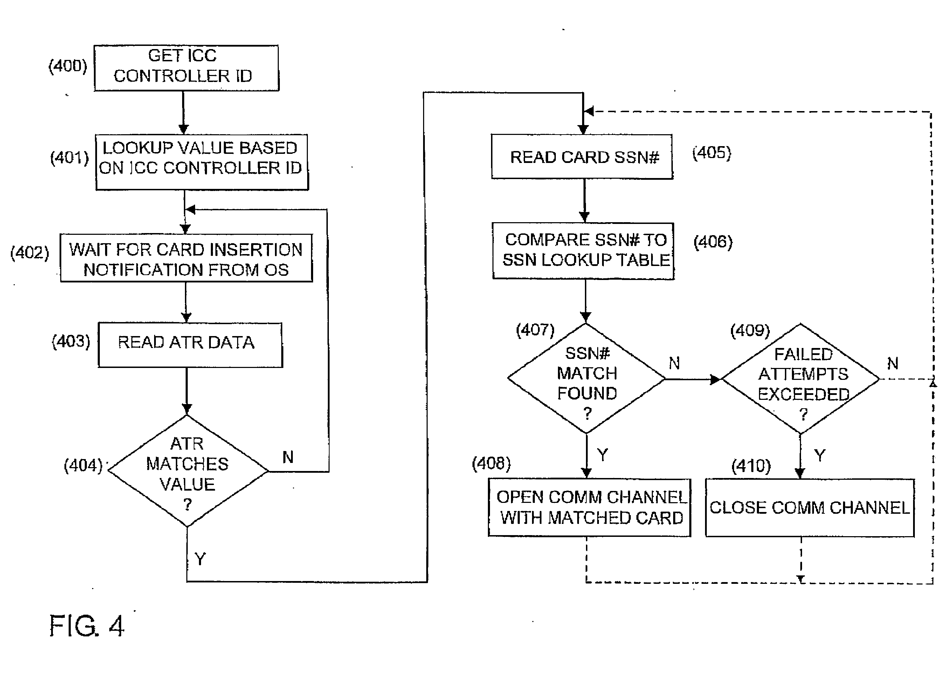

For example, the contactless ICC controller (100) includes enhancements to permit a completely standard CCID software interface to be used for ICC application software, including pre-defined pseudo answer-to-reset (ATR) logic (103) that generates a conventional ATR data structure containing data elements pre-defined in the ICC controller (100). The conventional method acquires the ATR data directly from the ICC interface device with contacts; however, contactless ICC interface devices generally do not include ATR data structures, and instead use a serial number approach for identification. As such, in the present embodiment, the ATR logic (103) in the contactless ICC controller (100) is communicated to the host computer (300) through a conventional CCm command and response method, as is described below in FIG. 4.

Alternatively, in another embodiment, the specification includes vendor-specific commands, called Escape conunands in the CCID specification, which can be implemented for extended ICC control or other un-specified utility. In one embodiment, the contactless ICC controller (100) utilizes the CCID Escape commands to enable contactless ICC connectivity. This is accomplished by processing CCID Escape commands with special logic (104) that passes CCID Escape structured data intended for contactless ICC control and communication to a data converter (105) equipped with logic for mapping the CCID Escape structured data to a format to be applied to the RF circuit interface (107). That is, CCID Escape commands utilized in conventional systems are mapped by the data converter (105) to provide commands for controlling the contactless ICC interface device (not shown).

The RF circuit interface (107) is conventionally of three types; integrated, Universal Asynchronous Receiver/Transmitter (UART) attached, and serial peripheral interface (SPI) attached. In one embodiment, the integrated type includes RF circuitry in the contactless ICC controller (100) that is equipped to transmit and receive radio frequency signals appropriate for contactless ICC Communications. The RF requirements for integrated RF circuitry are defined by the ISO 14443 and ISO 15693 standards in embodiments of the present invention. In the UART attached mode, in one embodiment, two signals, transmit (TX) and receive (RX), provide an asynchronous data path between the controller (100) and an external RF circuit. In this case, the TX signal is a transmit channel and the RX signal is a receive channel. In the SPI attached mode, in still another embodiment, at least three signals provide a synchronous data path between the controller (100) and an external RF circuit. For example, a clock (CLK) provides a timing reference to input (DIN) and output (DOUT) signals.

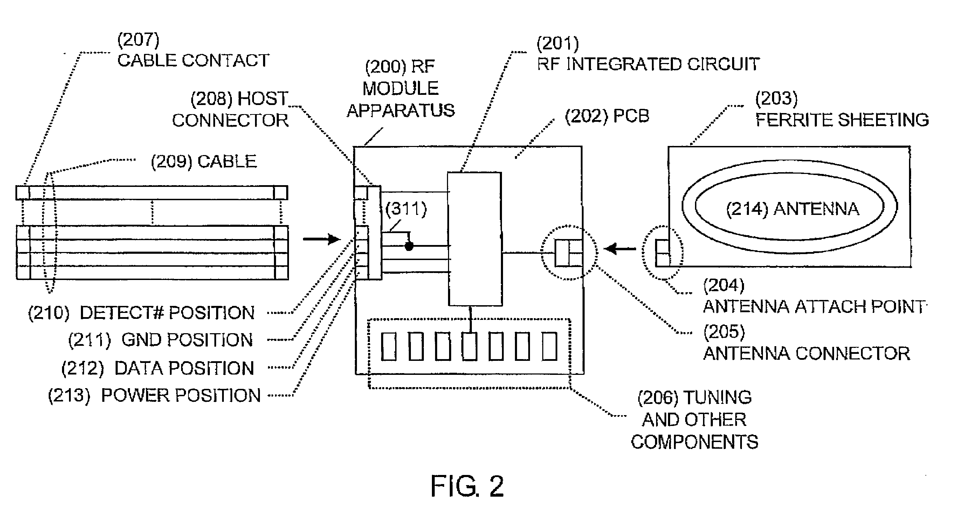

FIG. 2 illustrates an RF module apparatus (200) that connects to a host computer system (e.g., computer system (300) of FIG. 3) by means of a front-end cable (209). The RF module apparatus (200) is used to wirelessly communicate with a contactless ICC interface device. The front-end cable as shown in FIG. 2 plugs into the RF module (200) by means of a host connector (208) (e.g., a flexible flat cable [FFC] type or flexible printed circuit [FPC] type, etc.). In the present embodiment, the front-end cable (209) passes power and ground from the computer system (300) to the module (200). As such, the host cable connector (208) contains appropriate connector positions, such as power position (213), ground position (211), and data position (212) to accommodate the power pass-through from host computer system (300) to module (200).

In the present embodiment, the front-end cable (209) includes a module detection signal (210) that is used to recognize the presence of the RF module (200). That is, the front-end cable is able to support an appropriate detection signal position (210) on the host cable connector (208) to accommodate the module detection signal connectivity to the RF module. In one embodiment, by means of coupling (e.g., short circuit [311]) on the RF module apparatus 200 (e.g., when the ground position (211) is coupled to the module detection position (210)) the host system is able to determine that the RF module (200) is present by sampling the module detection signal (210). For example, in one embodiment the module detection signal (210) is able to assert a logic low level on a pull-up resistor included in the computer system (300). As such, through this procedure, the RF module (200) is present when a low logic level is sampled on the module detection signal (210).

In addition, the RF module (200) contains an RF integrated circuit (201) used for controlling and communicating with contactless ICC interface devices (e.g., particularly ICC interface devices that comply to ISO 14443, ISO 15693, or any other industry or proprietary standards used for contactless ICC connectivity). In one embodiment, the RF integrated circuit (201) contains a signal, or signals, for communicating with the host computer system (300). These signals pass through the front-end cable (209) to provide for communication between the RF module (200) and the host computer system (300). The host connector (208) accommodates this communications protocol through the appropriate cable connection data position (212). The data interface may be of the UART or SPI type described above.

In one embodiment, the RF module (200) comprises a printed circuit board PCB (202). The PCB as shown in FIG. 2 comprises an RF integrated circuit (201), front-end connector (208), antenna connector (205), and other RF module components (206), such as those useful for tuning the RF circuitry for particular antenna (214) and environmental considerations. In one embodiment components are mounted to the PCB through conventional soldering techniques, and all components in the embodiment are lead-free, such that the module can meet world-wide health and environment standards relating to lead in other embodiments of the present invention.

In one embodiment, the antenna connector (205) enables a cable-attached antenna (214) that is used for separating RF module placement restrictions on the computer system (300) from antenna placement restrictions. For example, the antenna (214) is made from a flexible printed circuit material and contains attach point contacts (204) that directly fit to the FPC antenna connector (205) on the RF module (200). Also in another embodiment, the structure of the antenna (214) contains a sheet of ferrite material (203) useful as a magnetic insulator that can limit the impact of other environmental considerations, such as other nearby components, on the contactless RF communications. The ferrite sheeting (203) is typically between 0.5mm to 1.5mm in thickness.

FIG. 3 illustrates a computer system (300) equipped with contactless ICC connectivity. The system (300) comprises a central processing unit CPU (301) that operates on data structures stored in system dynamic random access memory (DRAM) (302) and is coupled to other computer sub-systems through a centralized core chipset (305) logic component. The chipset (305) generally provides connectivity to a graphics processor (303) for user visual display through an accelerated graphics part (AGP) bus. The graphics subsystem includes a set of graphics DRAM (304) components for storing video related data structures. The chipset (305) generally provides connectivity to the system hard disk drive (HDD) (306), which is used in part to store the system operating system, applications, and user data files. The chipset (305) generally provides connectivity to the audio subsystem. For example, the audio subsystem includes an audio CODEC (307) for speaker and microphone audio connection. The chipset (305) also provides connectivity to a network connection (308), thus enabling a wired and/or wireless local area network LAN connection. For instance, the connection is able to implement and operate the internet protocol. The chipset (305) also provides connectivity to a variety of peripheral components through host bus interfaces such as USB serial bus interfaces (309) and other 10 connections (310) that may include peripheral component interconnect (PCI), PCI-Express, and IEEE1394 standards.

In one embodiment, the computer system (300) is coupled to a contactless ICC controller (100) through a USB interface (309), although other IO connections (310) may be used in alternate embodiments. The controller (100) is able to detect the presence of an RF module (200) that contains external RF circuitry. The RF module (200) provides for wireless communication with contactless ICC interface devices. For instance, in one embodiment, the controller (100) samples a signal wire called DETECT# (110) to determine the presence of the external RF circuitry of the RF module (200), as described previously, In particular, the RF module (200) comprises a host connector (208) that includes a ground position (211) and a DETECT# position (210). Also, the RF module (200) comprises a short circuit (311) that connects GND to DETECT# on the module. Through this configuration, the contactless ICC controller (100) is able to use the detection signal directly from the host cable (209) to identify the presence of the RF module (200), in one embodiment. More specifically, in one embodiment, the host computer system (300) comprises a pull-up resistor coupled to the DETECT# signal. As such, a high voltage level exists on the DETECT# signal when the RF module (200) is not connected to the host system (300), and a low voltage level exists on the DETECT# signal when the RF module (200) is connected to the host system (300).

The host connector (208) on the RF module (200) additionally contains at least one power position (213) and at least one ground position (211) to transfer power and reference ground to the RF module (200), Additionally, at least one data position (212) is allocated in the host connector (208) that exhibits a communications protocol that is common to the RF integrated circuit (201) on the RF module (200) and the contactless ICC controller (100).

In one embodiment, the antenna (214) is lacated on a separate PCB than the RF module (200). As an example, the antenna is manufactured on a flexible PCB material. Although any number of antenna designs are suitable, in one embodiment a conventional differential antenna (214) Structure is implemented. The differential antenna (214) structure has two connector positions on the antenna connector (205) residing on the RF module (200). By way of further detail, one embodiment limits antenna distance from the RF module up to 5cm based on environmental considerations, antenna PCB design, and tuning component (206) limitations. Alternate solutions may exceed 5cm with larger antenna design, and/or more accurate tuning. In practical embodiments, a sheet of ferrite material (203) attached to the antenna (214) provides a magnetic insulator.

FIG. 4 illustrates a contactless ICC software application flow for determining the identity of a contactless ICC interface device, in accordance with one embodiment of the present invention. In the present embodiment, the contactless ICC software application is aware of certain ICC controller devices. At (400), the present embodiment acquires the ICC controller ID. At (401), the present embodiment accesses a value, called VALUE, based on the ICC controller ID acquired in the first step (400). For instance, the present embodiment accesses a lookup table by referencing the ICC controller ID to determine the VALUE. As such, the contactless ICC software application is able to identify and communicate with the ICC controller device.

At (402), the present embodiment waits for the contactless ICC controller (100) to communicate a card insertion event. After the card insertion event is communicated, the present embodiment executes (403) to read the answer-to-reset (ATR) data from the controller (100). The ATR data is provided by the ICC controller (100) since the contactless ICC interface device typically does not provide ATR data, as previously described. Normally ATR data includes initial information provided by an ICC interface device upon reset, insertion, or power-up,

In the present embodiment, a branch is taken depending on the outcome of the decision block (404). The decision block (404) determines if the ATR data matches the VALUE stored in the (401). When no match is found, the present embodiment returns to (402) and waits for a new card insertion event. Alternatively, the present embodiment is able to stop attempting to identify the card.

On the other hand, at 404, when a match is found, the present embodiment proceeds to (405) to read the serial number (SSN#) from the contactless card through card-specific protocols. At (406), the present embodiment then compares the SSN# to a number of known serial numbers. For instance, the SSN# is compared to known serial numbers in a table in order to match known cards.

At 407, when a positive match is found, then the present embodiment opens a communications (COMM) channel to begin communications with the card based on known card parameters obtained from the previously described SSN# look up table.

On the other hand, when no match is found, the present embodiment at 409 performs a failure count compare. That is, a failed number of attempts is determined. For instance, at 407, when no SSN# match is found, the present embodiment increments a value for a failed number of attempts by one. Thereafter, the present embodiment determines if the value of the failed number of attempts exceeds a pre-determined number of failed attempts. If the value of failed attempts exceeds the pre-determined number of failed attempts, then the present embodiment proceeds to 410 and closes the COMM channel to stop communications with any open cards. The failure count may be pre-determined to be a value of one, in one embodiment.

On the other hand, at (409) if the value of the failed number of attempts exceeds the pre-determined number of failed attempts, the present embodiment returns to 405 to read the SSN# of the ICC card repetitively (e.g., using a traditional polling method) to determine the presence of a contactless ICC interface device after the first compare (404) yields a positive result.

In addition, the return to (405) is accomplished after the present embodiment opens the COMM channel at (408). Also, the return to (405) is accomplished after the present embodiment closes the COMM channel at (410).

Embodiments of the present invention apply to extending a CCID device to support contactless ICC communication, by means of including a controller-generated pseudo ATR for contactless cards, communicated through traditional CCID methods. Furthermore, in another embodiment includes a controller that senses the presence of external supporting RF circuitry required to support contactless ICC connectivity, and modifies the device behavior based on the sensing.

Embodiments of the present invention provide a unique modular approach, to enable contactless ICC connectivity through a connector, and include several unique RF module design requirements for the module itself and the connectivity to the host computer system, and detachable antenna. Further, embodiments of the present invention apply to contactless ICC software application methods for identifying a contactless ICC interface device, or Smart Card, using the pseudo ATR provided by the controller, and through polling techniques matching contactless ICC serial numbers to a lookup table with known card attributes.

As a result, legacy CCID software structures according to the present invention can be applied to both ICC interface devices that have contacts, and the new contactless ICC interface devices (e.g., Smart Cards). Furthermore, embodiments of the present invention provide a modular approach to enable contactless ICC connectivity that is consistent with conventional software methods, and includes attributes for an RF system compatible with contactless Smart Cards.

While the foregoing description and drawings represent the preferred embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

## Claims

1. , A controller for coupling a contactless integrated chip card (ICC) to a host computer having a host input/output bus interface, comprising:
a first logic set for detecting the presence of an external radio frequency transceiver RF circuitry, wherein said external radio frequency provides for communicating with said contactless ICC;
a second logic set comprising a Chip/smart Card Interface Device (CCID) interface, wherein said CCID interface is enabled when said first logic set positively detects the presence of said RF circuitry; and
a third logic set for converting data received by said CCID interface so as to cnmmunicatavely couple said contactless ICC to said host computer.

2. The device of Claim 1, wherein said third logic set converts data received by said CCID interlace from said host computer to a format compatible with said contactless ICC so as to conamunicatively couple said contactless ICC to said host computer.

3. The device of Claim 1, wherein said third logic set converts data received from said contactless ICC to a second format compatible with said host input/output signal interface.

4. The device of Claim 1, further comprising:
a fourth logic set comprising at least one pre-determined answer-to-reset (ATR) data structure associated with said controller for identifying said controller.

5. The device of Claim 1, wherein said third logic set converts said data received in the form of at least one of a plurality of Escape commands to said format compatible with said contactless ICC.

6. The device of Claim 1, wherein said CCID interface communicates a pre-determined and fixed positive presence of said contactless ICC in response to a status request.

7. The device of Claim 1, further comprising:
a fourth logic set for determining the presence of said contactless ICC through a polling technique.

8. The device of Claim 1, wherein said host input/output bus interface comprises a universal asynchronous receiver/transmitter UART signal interface.

9. The device of Claim 1, wherein said host input/output bus interface comprises a universal serial bus (USB) signal interface.

10. A method of identifying a contactless ICC, comprising:
detecting at a contactless ICC controller the presence of an external RF circuitry used for communicating with said contactless ICC;
enabling a Chip/smart Card Interface Device (CCID) interface when said external RF circuitry is detected; and
converting data received by said CCID interface so as to communicatively couple said contactless ICC to a host computer.

11. The method of Claim 10, wherein said converting data comprises:
converting data received by said CCID interface from said host computer to a format compatible with said contactless ICC.

12. The method of Claim 10, wherein said converting data comprises:
converting data received from said contactless ICC to a second format compatible with said host input/output signal interface.

13. The method of Claim 10, wherein said enabling a CCID interface further comprises:
acquiring an identifier associated with said contactless ICC controller; determining a pre-determined value based on said identifier; and
acquiring an answer-to-reset (ATR) data structure from said contactless ICC controller comprising at least one pre-determined answer-to-reset ATR data structure.

14. The method of Claim 13, further comprising:
comparing said ATR data structure with said pre-determined value, wherein said value corresponds to said contactless ICC controller device;
if said ATR data structure matches said pre-determined value, reading a serial number identification information from said contactless ICC; and
establishing a communication channel between said contactless ICC and said contactless ICC controller when said serial number identification information matches one of a plurality of known values corresponding to valid contactless ICCs.

15. The method of Claim 10, wherein said converting data further comprises:
converting data from at lest one of a plurality of Escape commands to a format compatible with said contactless ICC.

16. An apparatus capable of exchanging data with a contactless ICC, comprising:
a radio frequency (RF) circuit for communicating with said contactless ICC;
an antenna coupled to said RF circuit for enabling wireless communication between said RF circuit and said contactless ICC; and
a host system attachment for coupling said RF circuit to a host system, comprising:
a first signal position for a reference voltage ground to said apparatus;
a second signal position for a power supply to said apparatus;
a third signal position for data input/output to said RF circuit; and
a fourth signal position for indicating when said apparatus is coupled to said host system.

17. The apparatus of Claim 16, wherein in said fourth signal position, said first signal position and said fourth signal position are coupled together.

18. The apparatus of Claim 16, wherein said third signal position is one component of a universal asynchronous receiver/transmitter UART signal interface.

19. The apparatus of Claim 16, further comprising:
a fifth signal position to provide a timing clock reference to said third signal position.

20. The apparatus of Claim 16, wherein said host system attachment is coupled to a contactless ICC controller in said host system for converting data between a first format compatible with said contactless ICC and a second format compatible with an input/output signal interface associated with said host system.
